Europäisches Patentamt

European Patent Office

Office européen des brevets

(19)

(11) Numéro de.publication : **0 007 281**

**B1**

(12) ## FASCICULE DE BREVET EUROPÉEN

(45) Date de publication du fascicule du brevet :
19.05.82

(51) Int. Cl.³ : **C 09 D 5/08**

(21) Numéro de dépôt : 79400498.6

(22) Date de dépôt : 12.07.79

(54) **Peinture anti-rouille.**

(30) Priorité : 12.07.78 FR 7820859

(43) Date de publication de la demande :
23.01.80 (Bulletin 80/02)

(45) Mention de la délivrance du brevet :
19.05.82 Bulletin 82/20

(84) Etats contractants désignés :
DE GB NL

(56) Documents cités :
DE - A - 2 022 749
US - A - 2 568 424
US - A - 4 049 596

CHEMICAL ABSTRACTS, vol. 84, 1978, ref.
no. 6613h Columbus, Ohio, USA, OHTA,
TOKUYA ; TOGANO, SHIGCO : « Anticorrosive
resin coating compositions for protection of
metal films »

(73) Titulaire : **INDUSTRIES DES PEINTURES ASSOCIEES
(I.P.A.) Société anonyme dite:
2, rue Jean Jaurès B. P. 171
F-90001 Belfort Cedex (FR)**

(72) Inventeur : **Joannard, Alain
1, place de la Mairie
F-70350 Plancher les Mines (FR)**
Inventeur : **Berthelem, Alain
1, rue Keller
F-90000 Belfort (FR)**

(74) Mandataire : **Thevenet, Jean-Bruno et al
Cabinet BEAU DE LOMENIE 55 rue d'Amsterdam
F-75008 Paris (FR)**

Imprimerie Jouve, 18, rue St-Denis, 75001 Paris, France

EP 0 007 281 B1

## Peinture anti-rouille

La présente invention concerne une peinture anti-rouille.

Un inconvénient des produits de revêtement anti-rouille couramment utilisés est que leur teinte est imposée par le pigment anti-rouille utilisé : rouge du minium, vert du phosphate de chrome ou jaune des chromates de strontium, de zinc ou de baryum.

L'obtention d'un revêtement protecteur contre la rouille, d'une couleur particulière autre que celle du pigment anti-rouille utilisée, nécessite donc l'utilisation de plusieurs produits différents.

Un autre inconvénient de certains pigments anti-rouille connus réside dans leur toxicité. C'est le cas de dérivés du chrome, du plomb et du strontium qui ne répondent pas aux normes actuelles.

Il a été proposé d'améliorer les propriétés de revêtements protecteurs en réalisant des combinaisons de pigments.

Ainsi, la demande de brevet JA 75/98 518 à laquelle se rapporte l'article de « Chemical Abstracts », vol. 84, 1976, ref. n° 6613 h, préconise le mélange d'une composition de peinture avec du phosphate de zinc, du phosphate de calcium, du métaborate de baryum et/ou de l'oxyde de zinc, ainsi qu'éventuellement un ou plusieurs composés de type silane. Le revêtement est déposé sur la support à protéger, puis séché à 40 °C pendant 20 mn. et cuit à 80 °C pendant une heure pour obtenir le film protecteur désiré.

Un tel traitement final exclut une utilisation en tant que revêtement anti-rouille extérieur dans le domaine du bâtiment. Le brevet US 2 568 424 divulgue essentiellement les propriétés protectrices de phosphates de zinc, de fer et de manganèse, avec adjonction possible d'oxyde de zinc ou d'oxyde de titane en tant que charge inerte, et préconise aussi un traitement thermique final (à 180-200 °C).

Afin d'éviter une cuisson du revêtement, le brevet US 4 049 596 suggère l'utilisation d'un mélange binaire métaborate de baryum-borate de zinc, ce dernier étant considéré comme le meilleur pigment anti-corrosion.

Quant à la demande DE 2 022 749, elle propose d'ajouter un phosphate ou un hypophosphite d'un métal bi ou trivalent à un ou plusieurs pigments ayant une faible activité anti-corrosion, le phosphite ou l'hypophosphite ajouté n'influençant par la coloration.

Ainsi, de nombreuses compositions de peinture anti-rouille ont été proposées mais on ne trouve pas dans l'état de la technique une composition qui allie au moins les qualités suivantes :

— efficacité dans la protection des métaux ferreux contre la rouille au moins égale à celle des produits généralement utilisés,

— possibilité d'obtention d'une teinte pure quelconque indépendante des pigments anti-rouille utilisés,

— absence de toxicité, celle-ci étant appréciée en regard des règles en vigueur au sein de la Communauté Economique Européenne, et

— non nécessité d'un traitement thermique final du revêtement.

Le but de la présente invention est précisément de fournir une peinture possédant toutes ces propriétés.

Ce but est atteint par une peinture anti-rouille dans laquelle le système anti-rouille est choisi dans le groupe de pigments comportant le phosphate de zinc, le métaborate de baryum et l'oxyde de zinc, peinture caractérisée en ce que le système anti-rouille est constitué par 50 à 85 % en poids de phosphate de zinc, 10 à 35 % en poids de métaborate de baryum et 1 à 25 % en poids d'oxyde de zinc.

L'ensemble des pigments anti-rouille représente, de préférence, 10 à 20 % environ du poids de la peinture. Une proportion trop élevée de pigments anti-rouille conduit à une augmentation notable du coût de la peinture, à des difficultés d'obtention des couches opacifiantes pour certaines teintes, notamment le blanc et ses dérivés, et à une instabilité au stockage.

Les pigments anti-rouille n'ayant pratiquement pas de pouvoir colorant, on détermine la couleur de la peinture par adjonction d'un pigment coloré, comme pour une peinture classique non spécialement anti-rouille.

Les autres constituants de la peinture sont un liant, des charges et divers adjuvants usuels (agents mouillants et anti-mousse, siccatifs, solvants,....).

L'efficacité anti-rouille et la tenue de la peinture conforme à l'invention ont été testée et comparées avec les performances de produits de revêtement anti-rouille connus. Les résultats de ces essais figurent au tableau I et II ci-après.

La peinture P conforme à l'invention utilisée pour ces essais avait, en poids la composition suivante :

— pigments anti-rouille : 18,5 %
(dont 3,5 % de métaborate de baryum, 13 % de phosphate de zinc, 2 % d'oxyde de zinc)
— liant glycérophtalique : 40 %
— charges (baryte et mica) : 25 %
— solvant (white-spirit) : 12 %
— adjuvants, siccatifs : 4,5 %.

Les produits anti-rouille connus utilisés ont été :
A : minimum, B : peinture à la poudre de plomb,
C : anti-rouille au phosphate de zinc.

Les produits ont été appliqués en une couche (tableau I) ou en deux couches à 48 heures d'intervalle (tableau II) sur une plaque-support en acier préalablement débarrasée de toute trace de rouille.

Pour chaque critère examiné, une note entre 0 et 10 est attribuée. La note 10 indique l'absence de défaut, et la note 9 un début de défaut, par exemple quelques points de rouille pour le critère « protection du support ».

Ces essais démontrent que la peinture conforme à l'invention présente, à tout le moins, des propriétés anti-rouille égale à celles des produits de protection usuels.

Dans la peinture conforme à l'invention, le phosphate de zinc participe, avec le fer, à la formation de phosphates hydratés de fer qui augmentent le pouvoir d'adhérence et constituent des complexes inhibiteurs de corrosion. Des complexes ayant cette même propriété sont aussi formés par le phosphate de zinc avec les groupements carboxyliques du liant. Le pourcentage, en poids, de phosphate de zinc dans la peinture est de préférence d'environ 9 à 14 %.

Le métaborate de baryum, en présence de l'acide sulfurique de l'air, produit du sulfate de baryum. Le cation baryum apporte, sous sa forme hydroxyde soluble, un pH élevé s'opposant à la formation de rouille. Le pourcentage, en poids de métaborate de baryum dans la peinture est, de préférence, d'environ 3 à 4 %.

L'oxyde de zinc, enfin, contribue à abaisser le potentiel d'électrode à une valeur voisine et légèrement supérieure à celle du métal à protéger, d'où inversion de polarité et action protectrice. Le pourcentage, en poids, d'oxyde de zinc dans la peinture est, de préférence, d'environ 1,5 à 2 %.

C'est la combinaison des pigments anti-rouille utilisés qui confère toute son efficacité à la peinture conforme à l'invention. Il est remarquable que cette efficacité s'accompagne d'une absence de la toxicité liée à l'emploi de pigments anti-rouille contenant du plomb ou des chromates, et de la possibilité d'obtenir toutes les teintes pures voulues dans toute la gamme de couleurs par adjonction de pigments de coloration classiques puisque les pigments anti-rouille utilisés possèdent peu ou pas de pouvoir colorant.

Si l'on se situe en-deçà des limites inférieures indiquées pour les pourcentages des différents pigments anti-rouille, l'efficacité recherchée n'est pas pleinement atteinte. Par contre, si l'on se place au-delà des limites supérieures indiquées, cette efficacité n'est pas augmentée de façon significative et des inconvénients apparaissent. Parmi ceux-ci, on peut citer le coût relativement élevé des pigments anti-rouille utilisés, une instabilité au stockage pouvant résulter d'un excès d'oxyde de zinc ou de métaborate de baryum et une possible toxicité résultant d'une trop forte concentration en ions baryum.

L'utilisation de la peinture conforme à l'invention avec les teneurs indiquées pour les pigments anti-rouille offre la possibilité d'obtenir, avec un produit unique non toxique, un revêtement protecteur, coloré et brillant, ce qui constitue un avantage considérable en comparaison avec les produits anti-rouille usuels.

Enfin, les pigments anti-rouille utilisés dans la peinture conforme à l'invention sont compatibles avec toutes sortes de liants usuels, par exemple glycérophtaliques, association de résines époxyde et polyamide, résines époxyliques,...

La peinture P sur laquelle ont été effectués les essais dont les résultats sont reportés dans les tableaux I et II contenait un liant glycérophtalique.

D'autres essais ont été effectués sur une peinture P' conforme à l'invention dont la composition en poids est donnée ci-après :

— pigments anti-rouille : 18 %
(dont 1,7 % d'oxyde de zinc, 14,8 % de phosphate de zinc, 3,5 % de métaborate de baryum)
— liant : 19 %
(dont 13 % de résine époxyde, 6 % de résine polyamide)
— charges : 29 %
— solvant : 21 %
— pigments de coloration : 6 %
— adjuvants divers : 7 %

Un essai comparatif a été conduit avec une peinture D anti-rouille au chromate de zinc utilisant les mêmes liants que la peinture P' et dont la composition était :

— chromate de zinc : 18,5 %
— oxyde de zinc : 5,5 %
— liant (id. peinture P') : 10 %
— charges (id. peinture P') : 23 %
— solvant (id. peinture P') : 21 %
— pigment de coloration (id. peinture P') : 6 %
— adjuvants divers : 7 %.

Les essais ont été effectués en appliquant une couche des peintures P′ et D sur deux plaques d'acier identiques débarrassées de toutes traces de rouille.

Le tableau III résume les observations faites au bout de six mois.

Les pigments anti-corrosion de la peinture P′ lui permettent de réaliser des performances supérieures à celles de la peinture D.

Bien entendu, diverses modifications et adjonctions pourront être apportées aux modes de réalisation décrits ci-avant d'une peinture conforme à l'invention, sans pour cela sortir du cadre de protection défini par les revendications annexées.

(Voir Tableau, p. 5).

TABLEAU I

| | 3 mois et demi après application | | | | 7 mois après application | | | | 1 an après application | | | |
|---|---|---|---|---|---|---|---|---|---|---|---|---|
| | A | B | C | P | A | B | C | P | A | B | C | P |
| aspect brillant | 10 | 10 | 10 | 10 | 10 | 10 | 9-10 | 10 | 8-9 | 9 | 8 | 9 |
| couvrant | 10 | 6-7 | 7 | 8 | 10 | 6-7 | 7 | 7-8 | 8-9 | 6 | 7 | 6-7 |
| uniformité | 10 | 10 | 8-9 | 9 | 10 | 10 | 7-8 | 8 | 7 | 10 | 7 | 6-7 |
| adhérence | 10 | 10 | 10 | 9 | 9 | 10 | 10 | 9 | 6-7 | 6 | 8 | 8 |
| farinage | 10 | 6 | 7 | 7 | 9 | 6 | 6 | 7 | 6-7 | 6 | 5-6 | 7 |
| faïençage | 10 | 6 | 7 | 8 | 8-9 | 6 | 6 | 8 | 8 | 6 | 5-6 | 6 |
| fissuration | 10 | 9 | 9-10 | 10 | 9 | 8 | 8 | 10 | 7-8 | 6-7 | 6-7 | 7 |
| protection du support | 10 | 7-8 | 8-9 | 8-9 | 9-10 | 7 | 7-8 | 8-9 | 7-8 | 7-8 | 7 | 7-8 |

0 007 281

TABLEAU II

|  | 3 mois et demi après application | | | | 7 mois après application | | | | 1 an après application | | | |
|---|---|---|---|---|---|---|---|---|---|---|---|---|
|  | A | B | C | P | A | B | C | P | A | B | C | P |
| aspect brillant | 10 | 10 | 10 | 10 | 10 | 10 | 10 | 10 | 9 | 9 | 9 | 10 |
| couvrant | 10 | 10 | 10 | 10 | 10 | 10 | 10 | 10 | 10 | 9 | 9 | 10 |
| uniformité | 10 | 10 | 10 | 10 | 10 | 10 | 10 | 10 | 9 | 10 | 9 | 9 |
| adhérence | 10 | 10 | 10 | 10 | 10 | 10 | 10 | 10 | 8-9 | 8 | 9 | 9-10 |
| farinage | 10 | 10 | 10 | 10 | 10 | 9 | 10 | 10 | 8-9 | 8 | 9 | 9-10 |
| faïençage | 10 | 10 | 10 | 10 | 10 | 9 | 10 | 10 | 8 | 7 | 9 | 9 |
| fissuration | 10 | 10 | 10 | 10 | 10 | 10 | 10 | 10 | 8-9 | 8 | 8-9 | 8 |
| protection du support | 10 | 10 | 10 | 10 | 10 | 10 | 10 | 10 | 8-9 | 8-9 | 9 | 9-10 |

0 007 281

## TABLEAU III

| | : D | : P' | :: | | : D | : P' | : |
|---|---|---|---|---|---|---|---|
| aspect brillant | 9 | 9 | :: farinage | 7 | 9 | |
| couvrant | 8 | 9 | :: faïençage | 7 | 9 | |
| uniformité | 8 | 9 | :: fissuration | 7 | 8-9 | |
| adhérence | 8 | 9 | :: protection | | | |
| | | | :: du support | 8 | 8-9 | |

0 007 281

### Revendications

1. Peinture anti-rouille, dans laquelle le système anti-rouille est choisi dans un groupe de pigments comportant le phosphate de zinc, le métaborate de baryum et l'oxyde de zinc, caractérisée en ce que le système anti-rouille est constitué par 50 à 85 % en poids de phosphate de zinc, 10 à 35 % en poids de métaborate de baryum et 1 à 25 % en poids d'oxyde de zinc.

2. Peinture selon la revendication 1, caractérisée en ce que l'ensemble des pigments anti-rouille représente 10 à 20 % du poids de la peinture.

3. Peinture selon l'une quelconque des revendications 1 et 2, caractérisée en ce qu'elle comporte au moins un pigment de coloration lui conférant une teinte pure indépendante des pigments anti-rouille.

### Claims

1. Rust proof paint, in which the rust-proof system is selected from a group of pigments comprising zinc phosphate, barium metaborate and zinc oxide, characterized in that the rust-proof system is composed of between 50 and 85 % by weight of zinc phosphate, between 10 and 25 % by weight of zinc oxide.

2. Paint according to claim 1, characterized in that the composition of rust-proof pigments represents between 10 and 20 % by weight of the paint.

3. Paint according to any one of claims 1 and 2, characterized in that it comprises at least one coloring pigment giving it a pure coloring independent of the rust-proof pigments.

### Ansprüche

1. Rostschutzanstrich, in welchem das Rostschutzmittel aus einer Gruppe von Pigmenten gewählt wird, die Zinkphosphat, Bariummetaborat und Zinkoxyd enthält, dadurch gekennzeichnet, dass das Rostschutzmittel aus Zinkphosphat in Mengen von 50 bis 85 Gewichtsprozent, Bariummetaborat in Mengen von 10 bis 15 Gewichtsprozent und Zinkoxyd in Mengen von 1 bis 25 Gewichtsprozent besteht.

2. Anstrich nach Anspruch 1, dadurch gekennzeichnet, dass die Gesamtheit der Rostschutzpigmente 10 bis 20 % des Gewichts des Anstrichs darstellt.

3. Anstrich nach einem der Ansprüche 1 and 2, dadurch gekennzeichnet, dass er mindestens ein Farbpigment enthält, welches ihm einen reinen, von den Rostschutzpigmenten unabhängigen Farbton verleiht.